## Europäisches Patentamt
## European Patent Office
## Office européen des brevets

(11) Veröffentlichungsnummer: **0 021 158**
**B1**

(12)

# EUROPÄISCHE PATENTSCHRIFT

(45) Veröffentlichungstag der Patentschrift:
13.04.83

(51) Int. Cl.³: **B 29 D 27/04**

(21) Anmeldenummer: 80103108.9

(22) Anmeldetag: 04.06.80

(54) Einrichtung zum Herstellen von endlosen Schaumstoffbahnen, insbesondere Hartschaumstoffbahnen.

(30) Priorität: 15.06.79 DE 2924184

(43) Veröffentlichungstag der Anmeldung:
07.01.81 Patentblatt 81/1

(45) Bekanntmachung des Hinweises auf die Patenterteilung:
13.04.83 Patentblatt 83/15

(84) Benannte Vertragsstaaten:
AT BE CH DE FR GB IT LI NL

(56) Entgegenhaltungen:
EP-A-0 021 564
DE-A-1 923 531
DE-A-2 135 672
DE-A-2 231 064
DE-A-2 322 218
DE-A-2 557 572
US-A-3 553 300

(73) Patentinhaber: BAYER AG, Zentralbereich Patente, Marken und Lizenzen, D-5090 Leverkusen 1, Bayerwerk (DE)

(72) Erfinder: Hoffmann, Erwin, Martin-Buber-Strasse 47, D-5090 Leverkusen 3 (DE)
Erfinder: Dietrich, Werner, Dr., Fürvelser Strasse 25, D-5000 Köln 80 (DE)
Erfinder: Kraft, Karl Josef, Dr., Heymannstrasse 38, D-5090 Leverkusen (DE)

BUNDESDRUCKEREI BERLIN

## Einrichtung zum Herstellen von endlosen Schaumstoffbahnen, insbesondere Hartschaumstoffbahnen

Die Erfindung richtet sich auf eine Einrichtung zum Herstellen von endlosen Schaumstoffbahnen, insbesondere Hartschaumstoffbahnen, die gegebenenfalls mit Deckschichten kaschiert sind, bestehend aus einer Förderfläche, über die einlaufseitig ein geneigter Aufgabetisch und ein Querverteilorgan vorgesehen sind, und wobei über dem Aufgabetisch eine Gemischaufgabevorrichtung angeordnet ist.

Mit derartigen Einrichtungen werden endlose Schaumstoffblöcke oder Sandwichbahnen, die einen zwischen Deckschichten angeordneten Schaumstoffkern aufweisen, hergestellt. Im letzteren Falle bedient man sich eines sogenannten Doppeltransportbandes, bestehend aus einem Unterband und einem Oberband. Im Falle der Blockherstellung kann der sich bildende Schaumstoff frei aufsteigen und wird gegebenenfalls von oben her zur Vermeidung einer Wölbung egalisiert; im Falle der Sandwichbahnenherstellung wird zwischen den beiden Bändern Druck auf den entstehenden Schaumstoff ausgeübt.

Ein bisher noch nicht zufriedenstellend gelöstes Problem ist die kontinuierliche Verteilung des Reaktionsgemisches sowohl in Förderrichtung als auch insbesondere in Querrichtung.

Eines der gebräuchlichsten Verfahren ist der Auftrag des Gemisches mittels eines zeilenförmig hin und her bewegbaren Mischkopfes. Dabei entstehen jedoch an den Rändern Materialanhäufungen. Die oszillierende Bewegung des Mischkopfes verursacht an den Wendepunkten wegen der erforderlichen hohen Geschwindigkeit starke Stöße, die hohen Verschleiß erzeugen und Spritzer verursachen. Bei hohen Fertigungsgeschwindigkeiten tritt als weiteres Problem auf, daß sich der Abstand der Zeilen des zickzackförmig aufgetragenen Gemisches zu stark vergrößert.

Auch der Einsatz eines geneigten Aufgabetisches ist bekannt. Er hat den Vorteil, daß das aus dem Mischkopf ausströmende Reaktionsgemisch infolge des Neigungswinkels sanfter auf die Aufgabefläche auftrifft und dabei bereits auf diesem Aufgabetisch teilweise über die Arbeitsbreite verteilt wird. Bei größeren Arbeitsbreiten hat man auch schon mehrere parallel geschaltete Mischköpfe verwendet. Schwierigkeiten entstehen aber dort, wo die einzelnen Ströme beim Ausbreiten ineinanderfließen. Es bilden sich im Fertigprodukt Schlieren und Blasen.

Man hat deshalb auch schon versucht, den Gemischauftrag mittels eines Rakels oder einer Walze unter Bildung eines Spaltes mit der Förderfläche zu egalisieren. Dies wird dann problematisch, wenn der Spalt größere Breite aufweist. Es hat sich nämlich gezeigt, daß die Querverteilung nicht schnell genug vonstatten geht und daß das Reaktionsgemisch an den Rändern bereits vor dem Passieren des Spaltes zu schäumen beginnt. Daraus folgen inhomogene Randzonen; sowohl in der Struktur als auch in der Dicke. Deshalb bereitet insbesondere die Verarbeitung schnellreagierender Systeme erhebliche Schwierigkeiten.

Es ist also die Aufgabe zu lösen, bei der kontinuierlichen Fertigung von endlosen Schaumstoffblöcken, und insbesondere bei der Herstellung von Schaumstoffbahnen bzw. Sandwichbahnen mit Schaumstoffkern, durch entsprechende maschinelle Maßnahmen die Gemischverteilung über die Arbeitsbreite derart zu verbessern, daß eine zufriedenstellende Homogenität des Fertigproduktes erzielt wird. Dabei soll die Länge des Einlaufs bzw. die Gesamtlänge der Einrichtung möglichst gering gehalten sein.

Diese Aufgabe wird dadurch gelöst, daß

a) der Aufgabetisch mit der Förderfläche einen Winkel $\alpha$ zwischen 3 und 45° einschließt,

b) das Querverteilorgan zum Aufgabetisch und zur Förderfläche hin eine konvex gekrümmte Oberfläche aufweist,

c) die durch den Krümmungsmittelpunkt auf die Förderfläche gefällte Senkrechte von der zwischen dem Aufgabetisch und der Förderfläche gebildeten Knickstelle den Abstand X aufweist, der der Beziehung

$$X = (r + s + d_1 + d_2) \cdot tg\alpha$$

bei einer Abweichung bis $\pm 20\%$ genügt, wobei r den Krümmungsradius, s die Weite des Spaltes zwischen Querverteilorgan und Förderfläche, und $d_1$ und $d_2$ die gegebenenfalls vernachlässigbaren Dicken der Deckschichten bedeuten. Besteht eine Deckschicht aus mehreren Lagen, so ist selbstverständlich die Gesamtdicke zu berücksichtigen. Durch die Kombination dieser Maßnahmen wird eine verbesserte Homogenität bezüglich gleichmäßiger Dicke und Dichte über die Breite der gefertigten Bahn erzielt. Erst die Kombination der an sich einzeln bekannten Maßnahmen mit der definierten Anordnung des Verteilorgans brachte überraschenderweise den gewünschten Effekt. Beispielsweise konnten mit der erfindungsgemäßen Vorrichtung Hartschaumstoffplatten hergestellt werden, die eine bis zu 50% höhere Druckfestigkeit gegenüber herkömmlich gefertigten Bahnen besaßen. Der Winkel $\alpha$ sollte vorzugsweise zwischen 10 und 20°, insbesondere um 15° eingestellt sein. Offenbar bewirkt gerade der definierte Abstand des Verteilorgans von der Knickstelle im Zusammenhang mit der eingestellten Neigung des Auftragstisches eine besonders schnelle Querverteilung, wodurch die bisherigen Nachteile beseitigt werden.

Der Abstand des Auslasses der Aufgabevorrichtung vom Spalt muß zumindest so eingestellt sein, daß das Reaktionsgemisch nicht vor dem Passieren des Spaltes aufschäumt. Der optimale Abstand hängt von mehreren Faktoren ab, die nachstehend für Reaktionsgemische üblicher Viskosität, etwa zwischen 200 und 5000 mPa s aufgezeigt werden, ohne daß hierbei Anspruch auf Allgemeingültigkeit dieser Werte erhoben wird:

Bei einer Arbeitsbreite von 1,00 bis 1,40 m, einem Neigungswinkel des Aufgabetisches von 10—30°, einer Produktionsgeschwindigkeit von 5 bis 15 m/min und einer Ausströmgeschwindigkeit des Gemisches aus dem Auslaß von 1 bis 3 m/sec ist der Abstand des Auslasses vom Spalt mit etwa 1,00 bis 1,50 m vorteilhaft zu wählen. Ist der Abstand zu gering, treten Blasen und durch Überwälzungen verursachte Schlieren im Fertigprodukt auf; ist der Abstand zu groß, so reagiert das Gemisch vor Passieren des Spaltes und schäumt zu früh auf. Die angegebenen Werte sind keineswegs begrenzend gedacht. Fällt ein Faktor aus dem üblichen Rahmen, so ist dies durch einen oder mehrere andere Faktoren zu kompensieren. Die Angaben sind lediglich als richtungsweisend zu betrachten und geben dem Fachmann Anregung, das Optimum gezielt empirisch zu ermitteln.

Die Förderfläche kann aus dem Transportband selbst bestehen, über dem einlaufseitig der Aufgabetisch angeordnet ist. Dem eigentlichen Transportband kann aber auch ein starrer Tisch vorgeordnet sein, vor dem unmittelbar der neigbare Aufgabetisch angeordnet ist.

Beim Herstellen von Blockschaumstoff läßt man in der Regel eine Bodenfolie, die an den Seiten hochgefaltet wird, einlaufen. Sie bildet einen Trog für das aufzutragende Reaktionsgemisch. Dabei kann die Bodenfolie unter dem Aufgabetisch herlaufen oder darüber hinweggeführt sein. In gleicher Weise läßt sich bei der Herstellung von Sandwichbahnen die untere Deckschicht führen.

Im Falle der Verwendung einer starren unteren Deckschicht oder hintereinander angeordneter Einzelplatten, müssen diese unter dem Aufgabetisch hergeführt werden, weil sie wegen der Neigung des Aufgabetisches nicht durch die Knickstelle, ohne die Spaltweite zwischen Verteilorgan und Förderfläche zu verändern, hindurchführbar sind. In diesem Falle ist der Aufgabetisch mit PTFE oder einer Silikonschicht überzogen oder mit einer leicht auswechselbaren Platte aus solchem Werkstoff belegt. Das Gemisch läuft dann darauf auf die auf der Förderfläche transportierte Deckschicht hinab. Auch wenn man lediglich Schaumstoffbahnen oder Blöcke ohne darauf verbleibende Deckschichten herstellen will, hat es sich als zweckmäßig erwiesen, zum Schutze der Einrichtungsteile vor dem Anhaften des Reaktionsgemisches Papier- oder Kunststoff-Folien als Deckschichten zu benutzen, die nach dem Ausschäumen abgezogen werden. Theoretisch ist es natürlich auch möglich, auf solche Folien zu verzichten und die mit dem Reaktionsgemisch in Berührung kommenden Maschinenteile mit PTFE oder einer Silikonschicht zu überziehen um ein Anhaften zu vermeiden. Diese Maßnahme hat aber zu viele Nachteile und ist nicht sicher genug.

Nach einer besonderen Ausführungsform der Einrichtung ist die Knickstelle abgerundet. Dadurch wird ein sanfterer Übergang von dem Aufgabetisch auf die Förderfläche erzielt. Gleichzeitig kann auch die günstigste trichterförmige Verjüngung des Einzugsspaltes zwischen Querverteilorgan und Förderfläche bzw. Aufgabetisch erzielt werden.

Vorzugsweise besitzt die Einrichtung, wenn sie zum Arbeiten mit einer unteren Deckschicht mit einer entsprechenden Zuführvorrichtung versehen ist, unterhalb der Förderfläche im Bereich der Knickstelle eine sich quer erstreckende Saugvorrichtung und die Förderfläche und/oder der Aufgabetisch ist mit Durchbrüchen versehen.

Die Saugvorrichtung bringt den Vorteil, daß die mitgeführte Deckschicht in der Knickstelle anliegend gehalten werden kann, so daß eine definierte, gleichbleibende Spaltweite sichergestellt ist. Ansonsten bestünde die Gefahr, daß sich die Deckschicht unter der Zugspannung anhebt und sich gegen das Querverteilorgan anlegt.

Nach einer weiteren besonderen Ausführungsform ist die Krümmung der Oberfläche des Querverteilorgans ungleichmäßig.

Auf diese Weise läßt sich die Querschnittskontur des Querverteilorgans auf die Gestaltung der Knickstelle in vorteilhafter Weise abstimmen.

Besonders vorteilhaft ist die Ausführung des Spaltes mit unterschiedlicher Weite über die Arbeitsbreite gesehen. Auf diese Weise läßt sich das aus dem Mischkopf meist in dickem Strahl austretende Gemisch besser zu den Rändern hin verteilen, wenn in Verlängerung des austretenden Strahls der Spalt enger gehalten ist. Dies läßt sich bewerkstelligen durch entsprechende Verdickungen des Querverteilorgans oder durch Verdickungen auf der Oberfläche des Transportbandes. Vorzugsweise ist die Höhe der Verdickungen einstellbar.

Zur Steuerung des Aufschäumvorganges und zum Erzielen einer möglichst geringen Gesamtlänge der Einrichtung sind vorzugsweise dem Aufgabetisch und/oder der Förderfläche Temperierelemente zugeordnet. Vor dem Querverteilorgan wird zur Verzögerung der Reaktion vorzugsweise gekühlt, dahinter zu deren Beschleunigung vorzugsweise geheizt. Es eignen sich Kühl- und Heizschlangen, die von einem Medium durchströmt werden, elektrische Widerstandsheizungen, Warmluftheizungen, Strahler. Günstig ist beispielsweise eine Kühlung des Aufgabetisches auf etwa 10—18°C und eine Erwärmung des hinter dem Spalt angeordneten Abschnittes der Förderfläche auf etwa 25—80°C. Diese Werte können aber in besonderen Fällen durchaus über- oder unterschritten werden.

In der Zeichnung ist die erfindungsgemäße Einrichtung in bevorzugten Ausführungsformen rein schematisch und beispielhaft dargestellt und nachstehend näher erläutert.

Es zeigt

Fig. 1 die erste Ausführungsform in der Seitenansicht,

Fig. 2 die zweite Ausführungsform in der Seitenansicht,

Fig. 3 ein Querverteilorgan mit Verdickung, in der Vorderansicht,

Fig 4 eine Knickstelle in der Seitenansicht mit sanfter Abrundung und

Fig. 5 ein Querverteilorgan mit verschiedenen Krümmungsradien und Krümmungsmittelpunkten in der Seitenansicht.

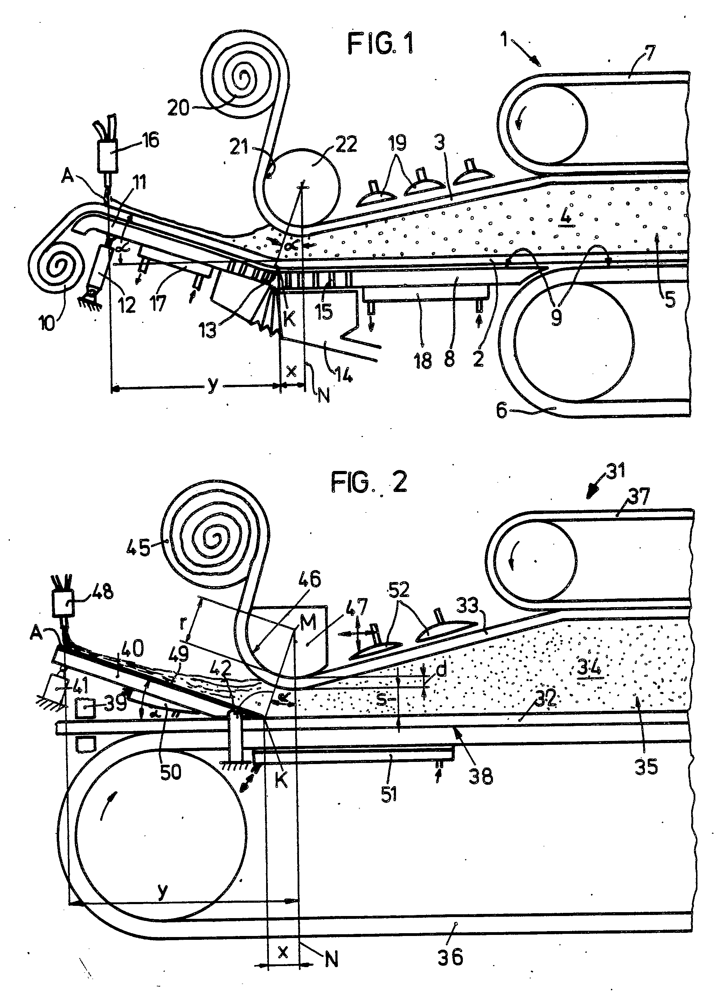

In Fig. 1 besteht ein Doppeltransportband 1 zum Herstellen einer mit Deckschichten 2, 3 versehenen und einen Hartschaumstoffkern 4 enthaltenden Sandwichbahn 5 aus einem Unterband 6 und einem Oberband 7. Das Obertrum des endlos umlaufenden Unterbandes 6 sowie ein diesem vorgeordneter Gleittisch 8 dienen als Förderfläche 9 für die untere Deckschicht 2. Sie gelangt von einer Abwickelstation 10 über einen unter dem Winkel $\alpha$ von 20° geneigten Aufgabetisch 11 durch die Knickstelle K auf die Förderfläche 9. Der Aufgabetisch 11 ist mittels einer verstellbaren Stütze 12 in seiner Neigung einstellbar und ist hierzu um die Achse 13 schwenkbar. Im Bereich der Knickstelle K ist unterhalb des Aufgabetisches 11 eine Saugvorrichtung 14 angeordnet, in deren Bereich der Aufgabetisch 11 und der Gleittisch 8 Durchbrüche 15 aufweisen. Auf diese Weise wird die untere Deckschicht 2 straff anliegend durch die Knickstelle K geführt. Das Reaktionsgemisch wird mittels eines über dem Aufgabetisch 11 angeordneten Mischkopfes 16 aufgegeben. Die Aufgabestelle weist von der Senkrechten N den Abstand $Y = 1,25$ m auf. Unterhalb des Aufgabetisches 11 ist eine Kühlvorrichtung 17 vorgesehen; unter dem Gleittisch 8 befindet sich eine Heizvorrichtung 18 und über dem Aufschäumbereich, d. h. oberhalb des Bereichs des Gleittisches 8, wird Infrarotstrahler 19 angeordnet. Die obere Deckschicht 3 läuft von einer Abwickelstation 20 ab und ist über die Oberfläche 21 eines als Walze ausgebildeten Querverteilorgans 22 geführt. Dieses erstreckt sich quer über die Arbeitsbreite des Unterbandes 6 und ist in dessen Längsrichtung, sowie auch in der Höhe zum Einstellen der Spaltweite s von 2 mm, verstellbar. Die Walze 22 besitzt einen Krümmungsradius von 100 mm. Die Deckschichten 2, 3 bestehen aus Bitumenpapier und weisen eine Dicke von $d_1 = d_2 = 0,5$ mm auf. Die Lage des Krümmungsmittelpunktes M des Verteilorgans 22 ist derart definiert, daß der Abstand X von der Knickstelle K 37,5 mm beträgt, und zwar gemäß der Formel

$$X = (r + s + d_1 + d_2) \cdot \mathrm{tg}\, 20°$$
$$X = (100 + 2 + 0,5 + 0,5) \cdot 0,36397.$$

In Fig. 2 besteht ein Doppeltransportband 31 zum Herstellen einer mit Deckschichten 32, 33 versehenen und einen Schaumstoffkern 34 enthaltenden Sandwichbahn 35 aus einem Unterband 36 und einem Oberband 37. Das Obertrum des endlos umlaufenden Unterbandes 36 dient als Förderfläche 38 für die untere steife Deckschicht 32. Sie gelangt von einer Aufgabestation 39 auf die Förderfläche 38, wobei sie unter dem Aufgabetisch 40 herläuft, der unter dem Winkel von 20° geneigt ist und mit der Förderfläche 38 bzw. der darauf geförderten Deckschicht 32 die Knickstelle K bildet. Der Aufgabetisch 40 ist mittels einer verstellbaren Stütze 41 in seiner Neigung einstellbar. Hierzu ist er um die Achse 42 schwenkbar. Die obere Deckschicht 33 läuft von einer Abwickelstation 45 ab und ist über die Oberfläche 46 eines als Balken ausgebildeten Querverteilorgans 47 geführt. Dieses Querverteilorgan 47 erstreckt sich quer über die Arbeitsbreite des Unterbandes 36, und ist in dessen Längsrichtung sowie auch in der Höhe zum Einstellen der Spaltweite s von 2 mm verstellbar. Seine Oberfläche 46 besitzt einen Krümmungsradius von 100 mm. Die untere Deckschicht 32 besteht aus einer steifen Kunststoff-Folie von der Dicke $d_1 = 2$ mm. Die obere Deckschicht 33 besteht aus Papier von der Dicke $d_2 = 0,1$ mm. Die Lage des Krümmungsmittelpunktes M des Querverteilorgans 47 ist derart definiert, daß der Abstand X von der Senkrechten N durch den Krümmungsmittelpunkt M zur Knickstelle K 37,1 mm beträgt, und zwar gemäß der Formel

$$X = (r + s + d_1 + d_2) \cdot \mathrm{tg}\, 20°.$$

Dabei ist $d_1 = 0$, weil die untere Deckschicht 33 unter dem Aufgabetisch 40 hergeführt ist und deshalb in die Rechnung nicht eingeht. $d_2$ ist wegen der geringen Dicke von 0,1 mm vernachlässigbar. Die vereinfachte Berechnungsformel lautet in diesem Falle also:

$$X = (r + s) \cdot \mathrm{tg}\, 20°;$$
$$X = (100 + 2) \cdot 0,36397;$$
$$X = 37,12494 \text{ mm}.$$

Der Mischkopf ist mit 48 bezeichnet und die Aufgabestelle A besitzt den Abstand $Y = 1,25$ m von der Senkrechten N durch den Krümmungsmittelpunkt M des Querverteilorgans 47. Der Aufgabetisch 40 ist mit einer Platte 49 aus Polytetrafluorethylen belegt, um ein Anhaften des Gemisches zu vermeiden. Unterhalb des Aufgabetisches 40 ist eine Kühlvorrichtung 50 vorgesehen; die Förderfläche 38 ist mit einer Heizvorrichtung 51 hinterlegt und oberhalb des Aufschäumbereiches sind Heizstrahler 52 angeordnet.

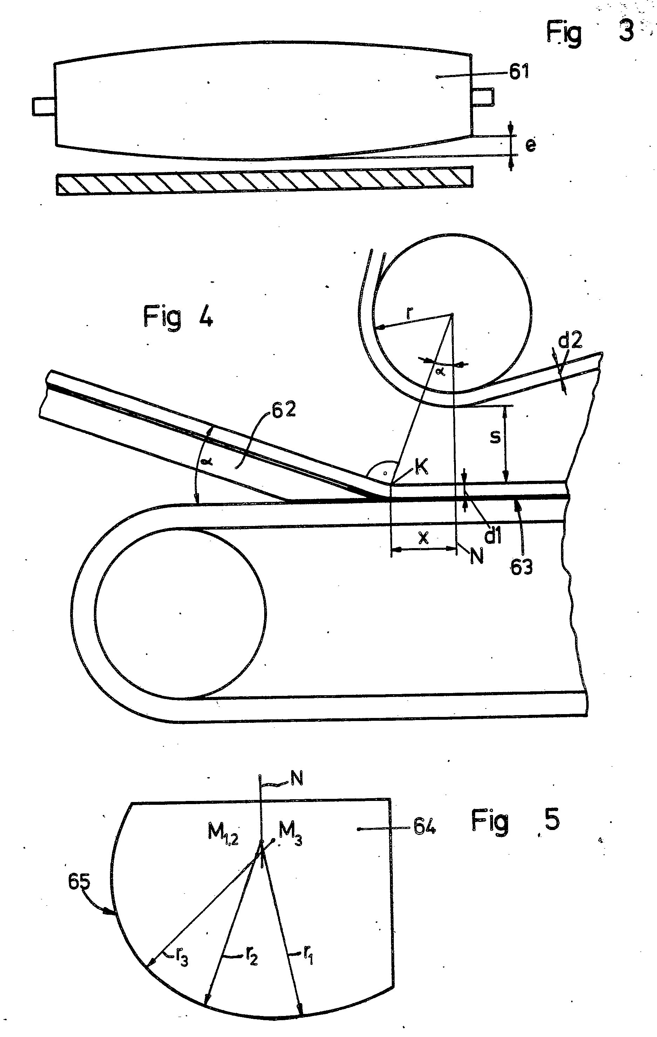

In Fig. 3 ist das als Walze ausgebildete Querverteilorgan 61 in der Mitte ballig ausgeführt und zwar ist der Unterschied im Radius zwischen Walzenmitte und Walzenrand $e = 0,18$ mm. Die Balligkeit ist, im Querschnitt gesehen, ähnlich einer Seilkurve gestaltet. Bei der Berechnung des Abstandes X kann der Wert e in der Regel vernachlässigt werden. Bei größerer Balligkeit rechnet man jedoch besser mit dem mittleren Radius.

In Fig. 4 ist die Knickstelle K sanft gerundet, so daß ein stetiger Übergang vom Aufgabetisch 62 zur Förderfläche 63 gegeben ist.

Fig. 5 zeigt ein Querverteilorgan 64, dessen Oberfläche 65 verschiedene Krümmungsradien $r_1$, $r_2$, $r_3$ zugeordnet sind. Die Übergänge von einem Oberflächenstück zum anderen sind gegebenenfalls durch eine Hüllfläche verbessert, oder die Krümmungsmittelpunkte M haben für jeden Krümmungsradius r eine besondere Lage wie z. B. $M_{1,2}$ für $r_1$ und $r_2$, $M_3$ für $r_3$. Für die Berechnung des Abstandes X dient der in der Senkrechten N gegebene Radius $r_1$. Schließt jedoch der Radius $r_2$ bereits sehr nah an der Senkrechten N an den Radius $r_1$ an oder weicht er stark von diesem ab, so ist vorzugsweise der Mittelwert der beiden benachbarten Radien oder ein den Gegebenheiten besser entsprechender angenommener Radiuswert zu benutzen. In aller Regel ist jedoch die Berücksichtigung von $r_1$ ausreichend, da die vorhandenen Unterschiede vernachlässigbar sein dürften und innerhalb der Toleranzgrenze liegen.

## Beispiel

Benutzt wurde eine Doppelbandanlage des Herstellers Maschinenfabrik Hennecke GmbH St. Augustin 1, Bundesrepublik Deutschland. Diese Maschine war mit einem feststehenden Mischkopf ausgestattet und ihr Aufbau entsprach im wesentlichen demjenigen gemäß Fig. 2, wobei jedoch die untere Deckschicht über dem Aufgabetisch geführt und in der Knickstelle durch Saugwirkung gehalten wurde. Die Fördergeschwindigkeit betrug 10 m/min. Es wurden 14 l/min Reaktionsgemisch aufgegeben. Die Arbeitsbreite betrug 1,25 m. Es sollten Sandwichbahnen mit beidseitigen, 0,1 mm dikken Papierdeckschichten, zwischen denen ein Hartschaumstoffkern angeordnet ist, hergestellt werden. Die Gesamtdicke der Bahnen sollte 40 mm betragen. Der Aufgabetisch wurde auf 15°C gekühlt, der Gleittisch auf ca. 30°C erhitzt.

Es wurde folgendes Reaktionsgemisch verwendet:

| | |
|---|---|
| 40 Gew.-Teile | eines Succrose-Ethers mit der OH-Zahl 520, |
| 12 Gew.-Teile | eines ethylendiamin-gestarteten Polyethers mit der OH-Zahl 480, |
| 12 Gew.-Teile | Glycerin, |
| 1,8 Gew.-Teile | Wasser, |
| 1,5 Gew.-Teile | eines Silikon-Stabilisators (Type OS 710 der Bayer AG, Leverkusen, BRD), |
| 1,5 Gew.-Teile | Dimethylcyclohexylamin, |
| 45 Gew.-Teile | Trifluorchlormethan, |
| 201 Gew.-Teile | rohes 4,4-Diphenylmethandiisocyanat mit Isomeranteilen |

(Desmodur® 44V20 der Bayer AG, Leverkusen, BRD)

Die Reaktionszeit dieses Gemisches betrug 120 Sekunden, wobei auf die Startzeit 10 Sekunden entfielen, auf die Abbindezeit 20 Sekunden und auf die Aushärtungszeit 90 Sekunden. (Definitionen gemäß »Kunststoffhandbuch« Band VII, »Polyurethane« Vieweg und Höchtlen, Carl-Hanser-Verlag, München, 1966).

### Versuch 1

Die Gemischaufgabestelle befand sich 1,25 m vor der als Querverteilorgan dienenden Walze von 100 mm Durchmesser. Der Egalisierspalt hatte eine Höhe von 2,0 mm. Ein geneigter Aufgabetisch war nicht vorhanden. Es wurden völlig unbrauchbare Sandwichbahnen produziert, da das Reaktionsgemisch bis zum Aufschäumen nur auf eine Breite von 100 mm verteilt werden konnte.

### Versuch 2

Anstelle eines Querverteilorgans war ein Aufgabetisch vorgesehen, der eine Neigung von 8° aufwies. Auch hier ergab sich eine unzureichende Querverteilung, die zu unbrauchbaren Sandwichbahnen führte.

### Versuch 3

Er stellte eine Kombination des Querverteilorgans gemäß Versuch 1 mit dem geneigten Aufgabetisch gemäß Versuch 2 dar. Das Gemisch wurde zwar vollständig über die Breite verteilt; die Kantenausbildung war jedoch unzureichend und die Dickenabweichung zu groß. Über die Breite gesehen ergaben sich folgende Dicken: linke Randzone 38 mm, bei $^1/_4$ Breite 40 mm, bei $^1/_2$ Breite (Mitte) 41 mm, bei $^3/_4$ Breite 40 mm, rechte Randzone 36 mm. Die Dickentoleranz liegt also bei 10%. Die mittlere Druckfestigkeit des Produktes betrug 0,24 MPa (gemessen nach DIN 53 421); die Rohdichte betrug 30 kg/m³.

### Versuch 4

Er entsprach Versuch 3, jedoch mit definierter Anordnung des Querverteilorgans im Abstand X zwischen Knickstelle und der Senkrechten N durch den Krümmungsmittelpunkt des Verteilorgans, wie es die Erfindung lehrt. Der Abstand X betrug dabei

$$X = (r + s) \cdot \text{tg } 8°;$$
$$X = (50 + 2) \cdot 0,14054 = 7,3 \text{ mm.}$$

Die Dicke der Deckschichten konnte vernachlässigt werden, das gefertigte Produkt besaß in der linken Randzone eine Dicke von 39,5 mm, bei $^1/_4$, $^1/_2$ und $^3/_4$ der Breite jeweils 40 mm und die rechte Randzone besaß eine Dicke von 40,1 mm. Damit liegt die Dickentoleranz unter 2%. Die Druckfestigkeit des Produktes betrug 0,29 MPa, die Rohdichte 30 kg/m³.

**Patentansprüche**

1. Einrichtung zum Herstellen von endlosen Schaumstoffbahnen, insbesondere Hartschaumstoffbahnen, die gegebenenfalls mit Deckschichten (2, 3) kaschiert sind, bestehend aus einer Förderfläche (9, 38), über der einlaufseitig ein geneigter Aufgabetisch (11, 40) und ein Querverteilorgan (22, 47) für das Reaktionsgemisch vorgesehen sind, und einer über dem Aufgabetisch angeordneten Gemischaufgabevorrichtung (16, 48), dadurch gekennzeichnet, daß

a) der Aufgabetisch (11, 40) mit der Ebene der Förderfläche (9, 38) einen Winkel $\alpha$ zwischen 3 bis 45° einschließt;

b) das Querverteilorgan (22, 47) zum Aufgabetisch (11, 40) und zur Förderfläche (9, 38) hin eine in Förderrichtung konvex gekrümmte Oberfläche (21, 46) aufweist,

c) die durch den Krümmungsmittelpunkt (M) auf die Förderfläche (9,38) gefällte Senkrechte (N) von der zwischen dem Aufgabetisch (11, 40) und der Förderfläche (9, 38) gebildeten Knickstelle (K) den Abstand X aufweist, der der Beziehung

$$X = (r + s + d_1 + d_2) \cdot tg\,\alpha$$

bis zu einer Abweichung von ±20% genügt, wobei r den Krümmungsradius, s die Weite des Spaltes zwischen Querverteilungsorgan (22, 47) und Förderfläche (9, 38), und $d_1$ und $d_2$ die gegebenenfalls vernachlässigbaren Dicken der Deckschichten (2, 32; 3, 33) bedeuten.

2. Einrichtung nach Anspruch 1, dadurch gekennzeichnet, daß die Knickstelle (K) abgerundet ist.

3. Einrichtung nach den Ansprüchen 1 oder 2, mit einer Zuführvorrichtung für eine untere Deckschicht, dadurch gekennzeichnet, daß unterhalb der Förderfläche (9) im Bereich der Knickstelle (K) eine sich quer erstreckende Saugvorrichtung (14) vorgesehen ist, und die Förderfläche (9) und/oder der Aufgabetisch (11) mit Durchbrüchen versehen ist.

4. Einrichtung nach den Ansprüchen 1 bis 3, dadurch gekennzeichnet, daß die Krümmung der Oberfläche (65) des Querverteilorgans (64) ungleichmäßig ist.

5. Einrichtung nach den Ansprüchen 1 bis 4, dadurch gekennzeichnet, daß die Weite des Spaltes (S) über die Arbeitsbreite gesehen, unterschiedlich ist.

6. Einrichtung nach den Ansprüchen 1 bis 5, dadurch gekennzeichnet, daß dem Aufgabetisch (11, 40) eine Temperiervorrichtung (17, 50) zugeordnet ist.

7. Einrichtung nach den Ansprüchen 1 bis 6, dadurch gekennzeichnet, daß dem hinter dem Querverteilorgan (22, 46) befindlichen Abschnitt der Förderfläche (9, 38) Temperiervorrichtungen (15, 19; 51, 52) zugeordnet sind.

**Claims**

1. An apparatus for the production of continuous webs of foamed plastics, in particular webs of rigid foamed plastics, which are optionally covered with surface layers (2, 3), consisting of a conveying surface (9, 38), above which on the inlet side an inclined feed table (11, 40) and a transverse distributing member (22, 47) for the reaction mixture are provided, and a mixture feeding device (16, 48) arranged above the feed table, characterised in that

a) between the feed table (11, 40) and the plane of the conveying surface (9, 38) an angle $\alpha$ of between 3 to 45° is enclosed;

b) the transverse distributing member (22, 47) has, facing the feed table (11, 40) and the conveying surface (9, 38), a surface (21, 46) which is convexly curved in the direction of conveyance,

c) the perpendicular (N) through the centre of curvature (M) to the conveying surface (9, 38) has the distance X from the bend point (K) formed between the feed table (11, 40) and the conveying surface (9, 38), which distance satisfies the relation:

$$X = (r + s + d_1 + d_2) \cdot tan\,\alpha$$

to a deviation of ±20%, where r denotes the radius of curvature, s denotes the width of the gap between the transverse distributing member (22, 47) and the conveying surface (9, 38), and $d_1$ and $d_2$ denote the optionally negligible thicknesses of the surface layer (2, 32; 3, 33).

2. The apparatus according to Claim 1, characterised in that the bend point (K) is rounded off.

3. The apparatus according to Claims 1 or 2, with a feed device for a lower surface layer, characterised in that beneath the conveying surface (9) in the region of the bend point (K) a transversely extending suction device (14) is provided and the conveying surface (9) and/or the feed table (11) is provided with perforations.

4. The apparatus according to Claims 1 to 3, characterised in that the curvature of the surface (65) of the transverse distributing member (64) is irregular.

5. The apparatus according to Claims 1 to 4, characterised in that the width of the gap (s) varies over the working width.

6. The apparatus according to Claims 1 to 5, characterised in that the feed table (11, 40) is equipped with a temperature control device (17, 50).

7. The apparatus according to Claims 1 to 6, characterised in that the section of the conveying surface (9, 38) downstream of the transverse distribution member (22, 46) is equipped with temperature control devices (15, 19; 51, 52).

## Reventications

1. Appareil pour la fabrication de bandes sans fin de matière cellulaire, en particulier de bandes de matière cellulaire dure qui éventuellement sont doublées de couches de couverture (2, 3), consistant en une surface de transport (9, 38), étant prévus du côté d'entrée une table d'alimentation inclinée (11, 40) et un organe distributeur transversal (22, 47) pour le mélange de réaction, et en un dispositif d'alimentation de mélange (16, 48) agencé au-dessus de la table d'alimentation, caractérisé en ce que

a) la table d'alimentation (11, 40) fait avec le plan de la surface de transport (9, 38) un angle $\alpha$ entre 3 et 45° ;

b) l'organe distributeur transversal (22, 47) présente par rapport à la table d'alimentation (11, 40) et par rapport à la surface de transport (9, 38) une surface courbe convexe dans la direction de transport (21, 46),

c) la perpendiculaire (N) abaissée par le centre de courbure (M) sur la surface de transport (9, 38) présents par rapport à l'endroit de flexion (K) formé entre la table d'alimentation (11, 40) et la surface de transport (9, 38) l'écartement X qui satisfait à la relation

$$X = (r + s + d_1 + d_2) \cdot tg\,\alpha$$

jusqu'à concurrence d'une déviation de ±20%, r signifiant le rayon de courbure, s la largeur de la fente entre l'organe distributeur transversal (22, 47) et la surface de transport (9, 38) et $d_1$ et $d_2$ les épaisseurs éventuellement négligeables des couches de couverture (2, 32; 3, 33).

2. Appareil selon la revendication 1, caractérisé en ce que l'endroit de flexion (K) est arrondi.

3. Appareil selon la revendication 1 ou 2, avec un dispositif d'amenée pour une couche de couverture inférieure, caractérisé en ce qu'au-dessous de la surface de transport (9) dans la région de l'endroit de flexion (K) est prévu un dispositif de succion (14) s'étendant transversalement et en ce que la surface de transport (9) et/ou la table d'alimentation (11) sont pourvues de perforations.

4. Appareil selon les revendications 1 à 3, caractérisé en ce que la courbure de la surface (65) de l'organe distributeurtransversal (64) est inégale.

5. Appareil selon les revendications 1 à 4, caractérisé en ce que la largeur de la fente (s), vue sur la largeur de travail, est inégale.

6. Appareil selon les revendications 1 à 5, caractérisé en ce qu'à la table d'alimentation (11, 40) est adjoint un dispositif de réglage de la température (17, 50).

7. Appareil selon les revendications 1 à 6, caractérisé en ce qu'à la section de la surface de transport (9, 38) se trouvant à l'arrière de l'organe distributeur transversal (22, 46) sont adjoints des dispositifs de réglage de la température (15, 19; 51, 52).

# FIG. 1

# FIG. 2

Fig 3

61

e

Fig 4

r

α

d2

62

α

s

K

d1

63

x

N

Fig 5

N

M₁,₂   M₃

64

65

r₃   r₂   r₁